# EUROPÄISCHE PATENTSCHRIFT

(11) **EP 2 664 969 B1**
(45) Veröffentlichungstag und Bekanntmachung des Hinweises auf die Patenterteilung: **16.10.2019**
(21) Anmeldenummer: 13166814.7
(22) Anmeldetag: 07.05.2013
(51) Int. Cl.: G05B 13/02, G05B 17/02, G05B 13/04, G05D 7/06, B01J 19/24, B01J 19/00

(54) **Verfahren zur Lösung einer Steuerungsaufgabe in einer Prozessanlage**
Method for resolving a control task in a process plant
Procédé de résolution d'une tâche de commande dans une installation de processus

(30) Priorität: 15.05.2012 DE 102012104216
(43) Veröffentlichungstag der Anmeldung: 20.11.2013
(73) Patentinhaber: Z & J Technologies GmbH, 52355 Düren (DE)
(72) Erfinder: Knödler, Marco, 52353 Düren (DE)
(74) Vertreter: Popp, Eugen

(56) Entgegenhaltungen:
- WO-A1-02/086327
- US-A1- 2005 091 021

## Beschreibung

Die Erfindung betrifft ein Verfahren zur Lösung einer Steuerungsaufgabe in einer Prozessanlage gemäß dem Oberbegriff des Anspruchs 1.

Verfahren zur Lösung einer Steuerungsaufgabe in einer Prozessanlage, beispielsweise in einer Ethylenanlage zur Erzeugung von Ethylen aus Rohbenzin, sind aus dem Stand der Technik bekannt. Bei derartigen industriellen Steuerungsaufgaben müssen mehrere Stellgrößen verändert werden, um die Prozessanlage von einem Prozesszustand in einen anderen Prozesszustand zu überführen. Die Veränderung der Stellgrößen hat dabei Einfluss auf ein oder mehrere Prozessvariable, beispielsweise auf Drücke in Rohrleitungen der Prozessanlage, die eine entscheidende Randbedingung bei der Überführung eines Anlagenzustandes in einen anderen Anlagenzustand bilden. Die Steuerung der Veränderung der beiden Stellgrößen muss somit derart erfolgen, dass ein oder mehrere Prozessvariable während der Überführung der Zustände in ihren zulässigen Grenzbereichen verbleiben. Hierzu werden im Stand der Technik zumeist hinlänglich bekannte Steuerungs- und Regelungskonzepte, beispielsweise PID-Regler, eingesetzt, um die Stellgrößen zu verändern. Die in Rede stehenden Stellgrößen können beliebigen Prozessgeräten, insbesondere Armaturen, wie Absperrklappen, Absperrschieber, Absperrhähne oder Ventile jeglicher Art, zugeordnet sein. Bei den Stellgrößen kann es sich also beispielsweise um den Hub eines Ventils bzw. eines Absperrschiebers handeln, so dass die Stellgröße beispielsweise die Drosselung eines Fluid- oder Gasflusses, insbesondere in einer Rohrleitung einer Prozessanlage, bestimmt.

Üblicherweise werden bestimmte Stellgrößen innerhalb der Prozessanlage als führende Größen betrachtet oder auf einen konstanten Wert gesetzt, um die Steuerungsaufgabe zu vereinfachen und einfache Strukturen wie beispielsweise PID-Regler einzusetzen, die auf die jeweilige Stellgröße Einfluss nehmen. Dabei wird häufig nicht auf besondere Charakteristiken oder veränderliche Randbedingungen der beteiligten Komponenten oder des Prozesses eingegangen, auf den Einfluss genommen wird. Insbesondere industrielle Armaturen und Klappen nebst Antrieben sind wichtige Stellgrößen im Rahmen der oben genannten Aufgaben, die jedoch je nach Steuerungskonzept stärkeren Beanspruchungen ausgesetzt sind. So wird beispielsweise im Rahmen einer bekannten Steuerungsvariante mit zwei Spaltgasschiebern im Ethylenprozess ein Antrieb zur Veränderung einer Stellgröße konstant gefahren, während ein weiterer Antrieb einer Armatur durch Regelhübe einen Prozessdruck in zulässigen Grenzen hält. Auf die letztere Armatur wirkt dadurch eine übermäßige Beanspruchung, die zur verkürzten Standzeit sowie Fehlerzuständen innerhalb der Prozessanlage führen kann. Weiterer Stand der Technik in Bezug zu Verfahren zur Lösung einer Steuerungsaufgabe in einer Prozessanlage sind US2005/0091021 A1, sowie WO 02/086327 A1.

Aufgabe der vorliegenden Erfindung ist es daher, ein Verfahren zur Lösung einer Steuerungsaufgabe in einer Prozessanlage zu schaffen, welches maßgebliche Faktoren wie die mechanischen Charakteristiken von Prozesseinheiten wie Armaturen oder wechselnde Prozess-Charakteristiken berücksichtigt und so die Standzeiten der Prozesseinheiten, welche den Stellgrößen zugeordnet sind, erhöht und deren Ausfallwahrscheinlichkeit verringert.

Zur Lösung der oben genannten Aufgabe wird ein Verfahren mit den Merkmalen des Anspruchs 1 vorgeschlagen. Das erfindungsgemäße Verfahren zur Lösung einer Steuerungsaufgabe in einer Prozessanlage dient insbesondere zur Überführung der Prozessanlage von einem Ausgangszustand in einen Endzustand, durch Veränderung von wenigstens zwei Stellgrößen in deren Stellbereich, wobei die Stellgrößen einer oder mehreren Prozesseinheit(en), insbesondere Ventilen, Armaturen oder Klappen, zugeordnet sind und wobei die wenigstens zwei Stellgrößen wenigstens eine Prozessvariable der Prozessanlage, insbesondere einen Druck, beeinflussen. Das Verfahren zeichnet sich durch die folgenden Schritte aus: Ermitteln einer Werteverteilung der wenigstens einen Prozessvariablen für verschiedene Wertekombinationen der wenigstens zwei Stellgrößen in deren Stellbereich unter Berücksichtigung von einem oder mehreren Prozessparameter(n), insbesondere einer Temperatur, eines Volumenstroms oder mindestens einer physikalischen Konstanten der Prozessanlage, und Bestimmen einer Steuerkurve anhand der Werteverteilung der Prozessvariablen zur Veränderung der wenigstens zwei Stellgrößen, um die Prozessanlage von dem Ausgangszustand in den Endzustand zu überführen, unter Berücksichtigung von mindestens einer Randbedingung.

Ein wesentlicher Punkt der Erfindung liegt somit darin, dass vor der Durchführung der eigentlichen Steuerungsaufgabe zunächst für verschiedene Wertekombinationen der wenigstens zwei Stellgrößen die Werteverteilung der wenigstens einen Prozessvariablen ermittelt wird. Mit anderen Worten wird eine Modellbildung vorgenommen, welche die Verteilung der Werte der Prozessvariablen für verschiedene Wertekombinationen der zwei Stellgrößen simuliert. Die Erfindung ist nicht auf zwei Stellgrößen beschränkt, sondern es ist auch denkbar, den Einfluss von mehr als zwei Stellgrößen innerhalb ihrer Stellbereiche auf ein oder mehrere interessierende Prozessvariablen, wie beispielsweise bestimmte Drücke innerhalb von Rohrleitungen in einer Prozessanlage, zu ermitteln. Bei der Modellbildung bzw. bei der Simulation der Werteverteilung wenigstens einer Prozessvariablen ist es notwendig, dass ein oder mehrere Prozessparameter, beispielsweise Temperatur, Volumenstrom oder mehrere physikalische Konstanten innerhalb der Prozessanlage bei der Ermittlung der Werteverteilung der wenigstens einen Prozessvariablen berücksichtigt werden. Sobald die Werteverteilung der wenigstens einen Prozessvariablen unter Berücksichtigung ein oder mehrerer Prozessparameter abgeschlossen ist, kann anhand dieser Werteverteilung eine geeignete Steuerkurve bestimmt werden, welche die Veränderung der wenigstens zwei Stellgrößen vorgibt, um die Prozessanlage von dem Ausgangszustand in den Endzustand zu überführen. Bei der Bestimmung der Steuerkurve wird mindestens eine Randbedingung berücksichtigt, welche die Auswahl einer optimalen Steuerkurve zur Zustandsüberführung ermöglicht.

Mit dem erfindungsgemäßen Verfahren kann jegliche industrielle Steuerungsaufgabe mit mehreren Stellgrößen optimal gelöst werden, für die eine geeignete Modellbildung so vorgenommen werden kann, dass anhand der Werteverteilung der Prozessvariablen eine optimale Steuerkurve gefunden werden kann. Die Werteverteilung der Prozessvariablen in Abhängigkeit von den Stellgrößen lässt sich als mehrdimensionaler Raum veranschaulichen, der durch die Stellgrößen und die Prozessvariable aufgespannt wird. Unter den Begriff "Stellgröße" kann jegliche veränderliche Größe gefasst werden, die mit einer Prozesseinheit zusammenwirkt und die im Rahmen einer Steuerungsaufgabe Einfluss auf einen Prozess nehmen kann, beispielsweise die veränderliche Stellung von Industriearmaturen und Klappen oder der Hub eines Ventils.

Besonders vorteilhaft ist es, dass für verschiedene Prozessparameter unterschiedliche Werteverteilungen der wenigstens einen Prozessvariablen ermittelt werden können. Beispielsweise ändert sich die Werteverteilung der wenigstens einen Prozessvariablen für unterschiedliche Temperaturen, Fluidströme oder unterschiedliche physikalische Konstanten innerhalb der Prozessanlage. Somit muss die Werteverteilung der wenigstens einen Prozessvariablen unter Berücksichtigung von einer oder mehreren Prozessparametern erfolgen, die jedoch bei unterschiedlichen Prozessen unterschiedlich ausgebildet sein können. Beispielsweise ist es denkbar, vor der Überführung eines Ausgangszustandes der Prozessanlage in einen Endzustand bestimmte Annahmen für einen oder mehrere Prozessparameter zu treffen und anhand dieser angenommenen Prozessparameter die Werteverteilung der wenigstens einen Prozessvariablen zu bestimmen. Diese Werteverteilung kann für verschiedene Kombinationen von Prozessparametern vorgenommen werden, sodass für unterschiedliche Prozessparameter und/oder Kombinationen derselben verschiedene Werteverteilungskurven bzw. -ebenen resultieren. Somit kann für jede spezifische Werteverteilung der wenigstens einen Prozessvariablen eine geeignete Steuerkurve ermittelt werden, wobei für mehrere Werteverteilungen folglich mehrere optimale Steuerkurven bestimmt werden, die in einem Computersystem hinterlegt sein können.

Es besteht jedoch auch die Möglichkeit, entsprechende Feedback-Signale über Prozessparameter unmittelbar aus dem laufenden Prozess zu erhalten, um eine entsprechende Optimierung der Ermittlung einer Werteverteilung unmittelbar während des Prozesses vornehmen zu können. Mit anderen Worten kann eine Optimierung der Steuerkurve bei veränderlichen Prozessparametern erfolgen. Veränderliche Prozessparameter können somit unmittelbar während des Prozesses in Echtzeit gemessen und zur Ermittlung einer Werteverteilung der wenigstens einen Prozessvariablen anhand der "Echtzeit-Prozessparameter" verwendet werden. Die Steuerkurve kann somit quasi in Echtzeit anhand der aktuellen Werteverteilung der wenigstens einen Prozessvariablen bestimmt werden. Insgesamt ist es somit möglich, die Prozessparameter bzw. den Prozessparameter vor Beginn und/oder während des zu steuernden Prozesses in der Prozessanlage zu erfassen und somit eine aktuelle Werteverteilung der Prozessvariablen und folglich eine aktuelle Steuerkurve zu ermitteln.

Vorzugsweise ist jeder Wertekombination in dem Stellbereich der wenigstens zwei Stellgrößen genau ein Wert der Prozessvariablen unter Berücksichtigung von ein oder mehreren Prozessparametern zugeordnet. Wie oben erläutert wurde, kann dieser Wert in Abhängigkeit von ein oder mehreren Prozessparametern variieren. Anschaulich kann die Werteverteilung der Prozessvariablen in den Grenzen der Stellbereiche der wenigstens zwei Stellgrößen mittels einer Höhenlandschaft bzw. einem Höhenprofil, welches die Werteverteilung einer Prozessvariablen für jede Wertekombination der Stellgrößen wiedergibt, dargestellt werden. Es versteht sich, dass für unterschiedliche Prozessvariablen unterschiedliche Werteverteilungen vorgesehen sein können. Vorzugsweise ist jeder Wertekombination in dem Stellbereich der wenigstens zwei Stellgrößen zur Erzeugung der Werteverteilung einem Wert der Prozessvariablen unter Berücksichtigung der ein oder mehreren Prozessparameter zugeordnet. Ein Zustand der Prozessanlage wird folglich vorteilhafterweise durch eine Wertekombination der wenigstens zwei Stellgrößen definiert.

Die Bestimmung der Steuerkurve erfolgt vorteilhafterweise mittels eines Pfadsuche-Verfahrens (-Algorithmus), wobei die Pfadsuche innerhalb der Werteverteilung der Prozessvariablen durchgeführt wird. Während des Pfadsuche-Verfahrens wird folglich ein geeigneter Pfad von dem Ausgangszustand der Prozessanlage zu dem Endzustand der Prozessanlage unter Berücksichtigung der mindestens einen Randbedingung gesucht. Der Ausgangszustand der Prozessanlage wird widergespiegelt durch eine erste Wertekombination der wenigstens zwei Stellgrößen und der Endzustand der Prozessanlage wird widergespiegelt durch eine zweite Wertekombination der wenigstens zwei Stellgrößen. Jeder Zustand der Prozessanlage wird mit anderen Worten durch Koordinaten der Stellgrößen festgelegt. Die Steuerkurve bestimmt nun den Pfad, der eine Veränderung der Stellgrößen derart bewirkt, dass der Ausgangszustand der Prozessanlage in den Endzustand, unter Berücksichtigung mindestens einer Randbedingung, in optimaler Weise überführt wird. Die ein oder mehreren Randbedingungen, die zur Bestimmung der Steuerkurve herangezogen werden, kann beispielsweise ein festgelegter Grenzbereich der wenigstens einen Prozessvariablen sein. Sofern es sich bei der Prozessvariablen um einen Druck handelt, kann die Randbedingung beispielsweise eine obere und eine untere Druckgrenze sein, die nicht über- bzw. unterschritten werden darf. Weiterhin kann eine Randbedingung durch den Stellbereich der Stellgrößen festgelegt werden. Eine weitere Randbedingung kann durch mechanische Charakteristiken der Prozesseinheit(en) festgelegt werden.

Die Erfindung wird im Folgenden anhand der Zeichnung näher erläutert. Es zeigen:
- Fig. 1: Eine schematische Darstellung einer bekannten Anlage zur Ethylen-Erzeugung;
- Fig. 2: eine schematische Darstellung eines electrical-linkage Systems unter Anwendung der vorliegenden Erfindung;
- Fig. 3: eine schematische Darstellung einer Grundfläche eines Parameterraums, der durch zwei Stellgrößen aufgespannt wird;
- Fig. 4: eine schematische Darstellung eines dreidimensionalen Parameterraums nach einer Ermittlung einer Werteverteilung einer Prozessvariablen für verschiedene Wertekombinationen zweier Stellgrößen, und
- Fig. 5: eine schematische Darstellung des Parameterraums als Projektion der Werteverteilung einer Prozessvariablen auf die Grundfläche des Parameterraums.

Die Erfindung wird im Folgenden am konkreten Beispiel "electrical-linkage" für ein 2-Schieber-System zur Entkokung einer Rohrleitung hinter dem Spaltgasofen in einem Ethylenprozess veranschaulicht. Das erfindungsgemäße Verfahren liefert für die Steuerungsaufgabe "Entkokung" im Ethylenprozess eine geeignete Lösung in Form einer optimalen Steuerkurve. Die Steuerungsaufgabe "Entkokung" dient lediglich der Veranschaulichung der Erfindung, die für viele andere Steuerungsaufgaben in vielen verschiedenen Prozessen allgemein anwendbar und keinesfalls auf das vorliegend erläuterte Beispiel, also weder auf die Entkokung noch auf den Ethylenprozess, beschränkt ist.

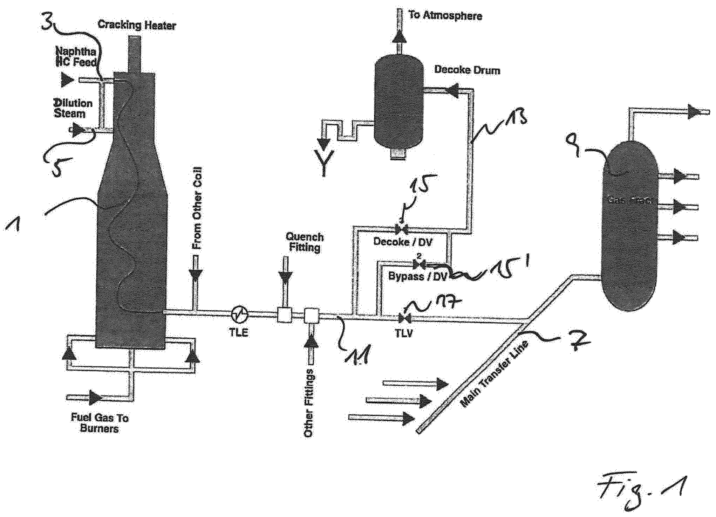

Ethylen ist ein leichtes Kohlenwasserstoffprodukt. Da es weder im Rohöl noch im Erdgas direkt vorkommt, muss Ethylen aus Zwischenprodukten der Erdöl- und Erdgasraffination erzeugt werden. Grundsätzlich wird Ethylen durch Zerlegung größerer Moleküle gewonnen. Diese Zerlegung, auch Cracken genannt, geschieht in Ethylenanlagen. Eine derartige Ethylenanlage ist in der Figur 1 gezeigt.

Es gibt hauptsächlich zwei Verfahren zur Herstellung von Ethylen, die im großen Maßstab verwendet werden, und die sich im Wesentlichen durch ihr Einsatzgebiet unterscheiden: In erdgasreichen Gebieten (z.B. Mittlerer Osten) wird Ethylen aus Ethan erzeugt, welches dort als Nebenprodukt anfällt. In Europa wird Ethylen im Wesentlichen aus Rohbenzin ("Naphtha") gewonnen. Das Rohbenzin wird wiederum in Erdölraffinerien gewonnen. Anlagen zur Herstellung von Ethylen sind daher meistens innerhalb oder zumindest in der Nähe von Raffinerien angesiedelt. Die flüssigen Kohlenwasserstoffe werden in der Ethylenanlage in gasförmige Reaktionsprodukte gespalten und über mehrere Trennungs- und Reinigungsverfahren in qualitativ hochwertige Produkte überführt.

Die Herstellung von Ethylen erfolgt durch Dampfpyrolyse in einem Reaktor 1 (Spaltgasofen) nach dem Steamcracking-Verfahren gemäß Figur 1. Dem Reaktor wird über eine erste Zufuhrleitung 3 Kohlenwasserstoff und über eine zweite Zufuhrleitung 5 Dampf zugeführt. Zum Cracken (Spalten) wird der Kohlenwasserstoff mit dem Dampf gemischt und auf 500 bis 650 °C vorgeheizt. In dem Reaktor 1 wird das Gemisch bei Temperaturen zwischen 700° und 900° C gecrackt. Der entstehende Produktstrom mehrerer Produktionslinien wird anschließend über eine Produkt-Hauptleitung 7 (Main Transfer Line) in angeschlossene Systeme 9 zur Weiterverarbeitung geleitet.

Über den Produktionsprozess sammeln sich in einer Produktleitung 11 (Transfer line), die mit der Produkt-Hauptleitung 7 verbunden ist, feste Kohlenwasserstoffe als Anbackungen und Rückstände. Diese verringern zunehmend den freien Querschnitt der Leitung und verändern auf diese Weise die Prozesscharakteristik. Um diese störenden Rückstände zu beseitigen, muss die Anlage von Zeit zu Zeit "entkokt" werden. Hierzu wird die Feed-Zufuhr zum Reaktor 1 und eine geeignete Dampfmenge eingestellt, die schließlich zusammen mit gelösten Koks-Rückständen über eine Entkokungs-Leitung 13 (Decoke Line) ausgeblasen wird. Nach Abschluss des Entkokungsprozesses ist die Ethylenanlage wieder in den Produktionszustand zu überführen, so dass das Produkt aus dem Reaktor 1 wieder über die Produktleitung 11 in die Produkthauptleitung 7 gefördert werden kann.

Für die Anwendung im Ethylenprozess werden beispielhaft Rohrbrückenschieber 15 und 17 verwendet, die dem Reaktor 1 nachgeschaltet sind. Im Normalzustand (Produktion) einer entsprechenden Produktionslinie befindet sich der Prozessschieber 17 (Transfer Line Valve, TLV) in der Produktleitung 11 in einem vollständig geöffneten Zustand, während ein Entkokungsschieber 15 (Decoke Valve, DV) mit einer kleineren Nennweite als der Prozessschieber 17 in der Entkokungs-Leitung 13 vollständig geschlossen ist.

Um den oben beschriebenen Entkokungszustand der Ethylenanlage herbeizuführen, muss der Entkokungsschieber 15 vollständig geöffnet sein, während der Prozessschieber 17 vollständig geschlossen ist. Je nach Anlagentyp kann ein zweiter Entkokungsschieber 15' mit größerer Nennweite dem ersten Entkokungsschieber 15 parallel geschaltet werden, welches nach Überführung der Prozessanlage in den "Entkokungszustand" zusätzlichen Querschnitt der Leitung freigibt.

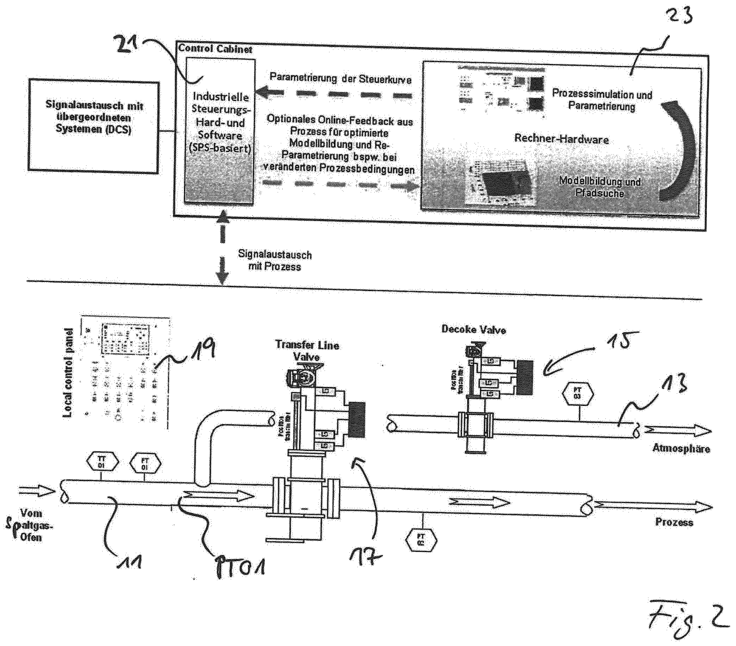

Der Übergang zwischen den geschilderten statischen Prozessanlagenzuständen (TLV offen, DV zu bzw. TLV zu, DV offen) muss unter besonderer Berücksichtigung des Anlagenzustandes erfolgen. Hierzu ist insbesondere der Druck PT01 in dem Leitungsabschnitt vor dem Prozessschieber 17 maßgebend (s. Figur 2), da dieser über entsprechend konstante Prozess- und Medienparameter direkt durch den von beiden Schiebern 15 und 17 freigegebenen Öffnungsquerschnitt beeinflusst wird und kritisch für die Anlagensicherheit ist. Wird der Druck PT01 nämlich zu groß, besteht eine Gefahr für die Rohrleitung. Ist der Druck PT01 hingegen zu gering, droht das Produkt aus der Produkthauptleitung 7 in den Reaktor 1 zurückzuströmen, da parallel geschaltete Ethylenanlagen weiter über die Produkthauptleitung 7 fördern. Der Druck PT01 bildet im vorliegenden Beispiel folglich eine Prozessvariable, die bei dem Zustandsübergang der Prozessanlage unbedingt berücksichtigt werden muss, da sie von den beiden Schiebern 15 und 17 beeinflusst wird. Die beiden Schieber 15 und 17 sind bei dem vorliegenden Beispiel unmittelbar jeweils einer Stellgröße zugeordnet, die einem Öffnungsquerschnitt der Leitungen 11 bzw. 13 entspricht.

Für die Steuerungsaufgabe "Entkokung" im Ethylenprozess muss daher ein Übergang der Prozessanlage von einem Ausgangszustand in einen Endzustand erfolgen, der dadurch definiert ist, dass ein Übergang zwischen den beiden Anlagenzuständen "Prozess" und "Entkokung" stattfindet. Dieser Übergang muss üblicherweise so erfolgen, dass eine gleichzeitige gegenläufige Bewegung der beiden Schieber 15 und 17 erfolgt, wie unten noch näher erläutert wird. Dies kann sowohl über eine mechanische Kopplung (Mechanical Linkage) als auch über elektrische Steuerungssysteme (Electrical Linkage) realisiert werden.

Eine typische Systemanordnung eines elektrischen Steuerungssystems zeigt die Figur 2. Maßgeblich für die Steuerungsaufgabe "Entkokung" ist der Entkokungsschieber 15 (DV) und der Prozessschieber 17 (TLV) der Ethylenanlage, deren Öffnungsquerschnitt durch Stellantriebe und entsprechende Instrumentierung beeinflusst wird. Entsprechende Prozessparameter, wie Drücke in den Leitungsabschnitten sowie Temperatur- und Durchflussmessungen, geben Aufschluss über Prozesszustand und die Medien-Charakteristik. Diese Prozessparameter werden vorzugsweise während des Prozesses durch entsprechende Messeinrichtungen gemessen und/oder sie sind in Form von Erfahrungswerten beispielsweise in einem Computer hinterlegt.

Der Übergang zwischen den Zuständen der Prozessanlage wird üblicherweise von einem lokalen Bedienpult 19 ausgelöst (Local Control Panel, LCP). Zur Überführung der Ethylenanlage von dem statischen Zustand "Prozess" in den statischen Zustand "Entkokung" muss eine geeignete Bewegung der beiden Schieber 15 und 17 erfolgen. Über ein elektrisches Steuerungssystem, bei denen Standard-Regelkreise (PID-Regler) zum Einsatz kommen, wird gemäß dem Stand der Technik die Bewegung der beiden Schieber 15 und 17 geregelt. Hierzu ist bei aus dem Stand der Technik bekannten Regelsystemen der Entkokungsschieber 15 (DV) als "Regelschieber" ausgebildet, der während einer konstanten Bewegung des Prozessschiebers 17 (TLV) eine Regelung in Abhängigkeit von dem Druck PT01 in dem Leitungsabschnitt in Flussrichtung vor dem Prozessschieber 17 als Regelgröße und dem Hub des Entkokungsschiebers 15 als Stellgröße vornimmt. Hierzu werden spezielle Regelantriebe verwendet, wobei die Schiebermechanik jedoch durch die teils in hoher Frequenz durchgeführten kurzen Hübe sehr stark beansprucht wird. Hierdurch verringern sich die Standzeiten und die Ausfallwahrscheinlichkeiten erhöhen sich.

Die vorliegende Erfindung löst dieses Problem, indem das erfindungsgemäße Verfahren maßgebliche Faktoren, wie die Charakteristik der Schiebermechanik oder wechselnde Prozesscharakteristiken, berücksichtigen.

Ein entsprechend ausgestattetes System zeigt die Figur 2, in welchem der Signalaustausch zwischen der Steuerung und der Prozessanlage über industrielle Steuerungs-Hardware 21 erfolgt, die an eine Rechner-Hardware 23 gekoppelt ist. Die Rechner-Hardware 23 ist insbesondere für eine Modellbildung, eine Pfadsuche sowie eine Prozesssimulation und eine Parametrierung ausgebildet.

Die Anwendbarkeit der Erfindung auf die beispielhafte Steuerungsaufgabe "Entkokung" im Rahmen des elektrischen Steuerungssystems (E-Linkage), wird im Folgenden dargelegt.

Grundsätzlich bezieht sich die Erfindung auf industrielle Steuerungsaufgaben mit mehreren Stellgrößen, welche die Grundlage für einen mehrdimensionalen Parameterraum bilden können, in welchem dann eine Pfadsuche zur Lösung einer konkreten Steuerungsaufgabe durchgeführt werden kann.

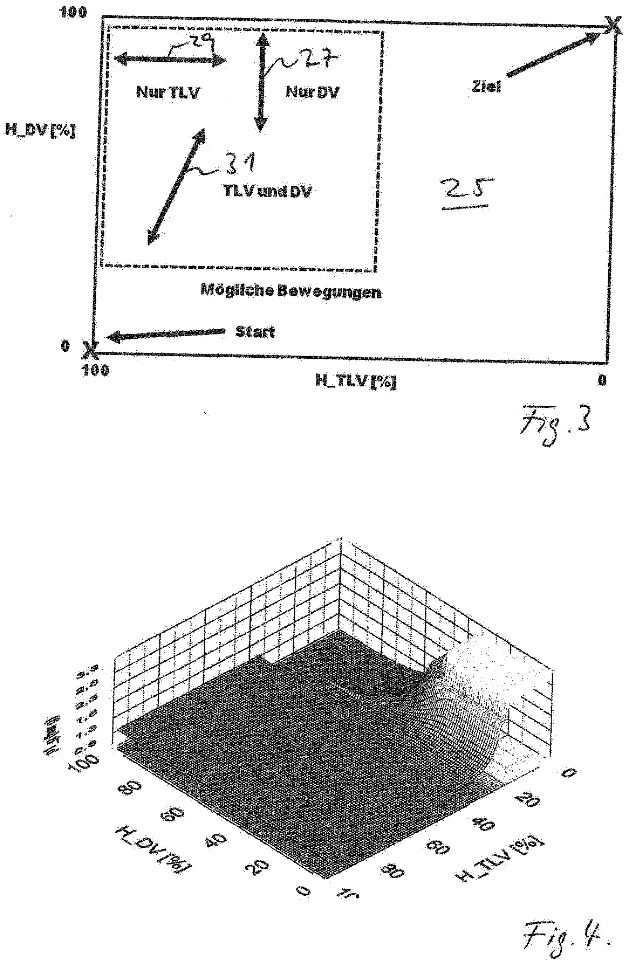

Im Falle des elektrischen Steuerungssystems der hier angesprochenen Art stehen zwei Stellgrößen in Form des Hubs der Schieber 15 und 17 zur Verfügung, die über ihren Hub auf den Prozess bzw. maßgeblich auf den Druck PT01 in dem Leitungsabschnitt vor dem Prozessschieber 17 einwirken. Anschaulich spannen diese beiden Stellgrößen damit die Grundfläche 25 für einen Parameterraum auf, wie in Figur 3 gezeigt ist. Es versteht sich, dass in dem vorliegenden Beispiel lediglich zwei Stellgrößen vorgesehen sind, während in anderen Beispielen mehr als zwei Stellgrößen vorgesehen sein können. In der Figur 3 bildet der Hub des Prozessschiebers 17 die x-Achse (H_TLV [%]) der Grundfläche 25, während der Hub des Entkokungsschiebers 15 die y-Achse (H_DV [%]) bildet. Der Stellbereich des Hubs der beiden Schieber 15 und 17 erstreckt sich von 0% bis 100% bzw. von 100% bis 0%, was einem minimalen Hub und einem maximalen Hub der Schieber entspricht. Der Bereich zwischen dem minimalen Hub und dem maximalen Hub bildet folglich den Stellbereich der Schieber.

Ein Zustand der Prozessanlage wird durch eine bestimmte Koordinate (x, y) auf der Grundfläche 25 definiert, die sich aus einer Wertekombination der ersten Stellgröße und der zweiten Stellgröße ergibt. In der Figur 3 ist ein Ausgangszustand A der Prozessanlage, im vorliegenden Beispiel der Zustand "Prozesse", mit der Koordinate (100, 0) gekennzeichnet. In diesem Zustand ist der Entkokungsschieber 15 vollständig geschlossen (Hub DV = 0%), während der Prozessschieber 17 vollständig geöffnet ist (Hub TLV = 100%). Weiterhin ist in der Figur 3 ein Endzustand B der Prozessanlage, im vorliegenden Beispiel der Zustand "Entkokung", mit der Koordinate (0, 100) gekennzeichnet. In diesem Zustand ist der Entkokungsschieber 15 vollständig geöffnet (Hub DV = 100%), während der Prozessschieber 17 vollständig geschlossen ist (Hub TLV = 0%).

Bewegungen zwischen den Zuständen A und B der Prozessanlage erfolgen durch Veränderung der Stellgrößen im Bereich zwischen 0 % und 100 %. Die Steuerungsaufgabe besteht nun darin, die Stellgrößen H_TLV und H_DV unter Berücksichtigung der Prozessvariablen, im vorliegenden Beispiel der Druck PT01, so zu verändern, dass die Steuerkurve einen optimalen Verlauf aufweist im Hinblick auf wenigstens eine Randbedingung, die darin bestehen kann, dass der Druck PT01 in einem gewünschten Grenzbereich während des Zustandsüberganges verbleibt. Grundsätzlich sind durch geeignete Beeinflussung der Stellgrößen H_TLV und H_DV beliebige Bewegungen auf der Grundfläche 25 möglich und durch das erfindungsgemäße Verfahren abbildbar. Sofern jedoch Stellantriebe mit konstanter Stellgeschwindigkeit verwendet werden, sind die Bewegungsmöglichkeiten der Schieber und damit die Bewegung der Stellgrößen auf der Grundfläche eingeschränkt.

Somit muss eine Überführung der Prozessanlage von dem Zustand A in den Zustand B über definierte Bewegungsvektoren erfolgen, die in beide Richtungen wirken. Die Figur 3 zeigt, dass senkrechte bzw. waagerechte Bewegungen 27 und 29 durch Veränderung lediglich einer Stellgröße H_TLV oder H_DV möglich sind. Des Weiteren können Querbewegungen 31 auf der Grundfläche 25 in einem Winkel erfolgen, der proportional zu den Verhältnissen zwischen den Stellgeschwindigkeiten der Schieberantriebe sind. Entsprechende Bewegungsmöglichkeiten werden bei der sich anschließenden und noch zu erläuternden Pfadsuche über den Parameterraum berücksichtigt.

Die Ausgangssituation zur Anwendung eines Pfadsuche-Verfahrens ist üblicherweise die Angabe eines Ausgangs- sowie eines Endpunktes. Im vorliegenden Beispiel sei beispielsweise der Ausgangszustand die Schieberkonstellation im Prozesszustand (Zustand A) und das Ziel der Entkokungsszustand (Zustand B) gemäß Figur 3. Es liegen somit alle Voraussetzungen zur Anwendbarkeit von Pfadsuche-Algorithmen auf das Steuerungsproblem eines elektronischen Steuerungssystems vor.

Die Prozessanlage könnte nun ohne Berücksichtigung einer Prozessvariablen in den gewünschten Zielzustand B überführt werden, beispielsweise mit der Maßgabe, den kürzesten Weg zwischen den Zuständen A und B zu finden und als Steuerkurve in der industriellen Steuerung zu hinterlegen. Wie oben erläutert wurde, sind jedoch entsprechende Prozessvariable zwingend zu beachten, um die Anlagensicherheit zu gewährleisten. Im vorliegenden Beispiel muss, wie oben dargelegt, der Druck PT01 in dem Leitungsabschnitt vor dem Prozessschieber 17 in einem Grenzbereich gehalten werden, d.h. er darf ein Minimum nicht unterschreiten und ein Maximum nicht überschreiten.

Gemäß der vorliegenden Erfindung wird die Prozessvariable PT01 und der Einfluss der Stellgrößen H_DV und H_TLV auf diese Prozessvariable bei der Pfadsuche zwischen den Zuständen A und B berücksichtigt. Die Berücksichtigung erfolgt dadurch, dass zur Lösung des Steuerungsproblems eine geeignete Modellbildung vorgenommen wird, welche die Beziehung zwischen den beiden Stellgrößen H_DV, H_TLV und der beeinflussten Prozessvariable PT01 beschreibt. Dieses Verfahren lässt sich auf mehr als zwei beliebige Stellgrößen und auf ein oder mehrere beliebige Prozessvariablen, die von den Stellgrößen beeinflusst werden, übertragen.

Die Modellbildung erfolgt insbesondere im Ethylenprozess unter Heranziehung von Medieneigenschaften wie Volumenstrom und Temperatur sowie physikalische Konstanten, die in einer Beziehung zwischen den Stellgrößen H_TLV, H_DV und der beeinflussten Prozessvariable PT01. resultieren. Die Prozessvariable PT01 wird mit anderen Worten jeweils für feststehende Prozessparameter wie Volumenstrom (FT01) und Temperatur (TT01) etc. vor der Durchführung des Zustandsübergangs bestimmt.

Da die Prozessparameter wie Volumenstrom und Temperatur etc. variieren können, kann die Modellbildung für verschiedene Größen der Prozessparameter getrennt erfolgen. Die Modellbildung resultiert dann in mehrdimensionalen Datenstrukturen, die quasi als Kurvenscharen in der industriellen Steuerung hinterlegt werden. Dies kann optional oder zusätzlich "online" geschehen auf Basis aktuell gemessener Prozessparameter. Somit wird das nachfolgende Vorgehen entweder vielfach im Vorfeld (offline) der Steuerungsaufgabe bzw. des Prozesses und/oder während des laufenden Prozesses (online) angewandt.

Die Modellbildung erfolgt durch das Ermitteln einer Werteverteilung der Prozessvariablen PT01 für verschiedene Wertekombinationen der zwei Stellgrößen H_TLV und H_DV in deren Stellbereich unter Berücksichtigung von einem oder mehreren Prozessparameter(n), insbesondere einer Temperatur, eines Volumenstroms oder mindestens einer physikalischen Konstanten der Prozessanlage. Wie oben angedeutet, ist die Werteverteilung der Prozessvariablen PT01 abhängig von den Stellgrößen H_TLV und H_DV und von ein oder mehrere Prozessparameter(n), da der Druck PT01 auch von der Prozesstemperatur und von der Art des Mediums etc. abhängt. Aus den resultierenden Abhängigkeiten lässt sich ein Gleichungssystem aufstellen. Wird dieses Gleichungssystem (beispielsweise mittels Nullstellensuche) zu einem eindeutigen Ergebnis gebracht, ergibt sich für jede Koordinate (x, y) auf der Grundfläche 25 ein korrespondierender Druck PT01. Es entsteht folglich eine Werteverteilung der Prozessvariablen PT01 in Abhängigkeit von verschiedenen Wertekombinationen der beiden Stellgrößen H_TLV und H_DV. Für jeden/alle festgelegten Prozessparameter ergibt sich somit eine andere Werteverteilung für Wertekombinationen der Stellgrößen. Diese unterschiedlichen Werteverteilungen bilden die oben erläuterten "Kurvenscharen", die in einem Computersystem gespeichert sein können.

Die Werteverteilung der Prozessvariablen kann als "Höhenlandschaft" aufgefasst werden und wandelt die Grundfläche somit zu einer dreidimensionalen Verteilung, wie sie in Figur 4 gezeigt ist. Somit entsteht durch die Modellbildung anschaulich ein 3D-Parameterraum mit der Prozessvariablen PT01 als "Höhe", welche die Druckverteilung für verschiedene, vorzugsweise sämtliche Wertekombinationen der Stellwerte H_TLV und H_DV angibt.

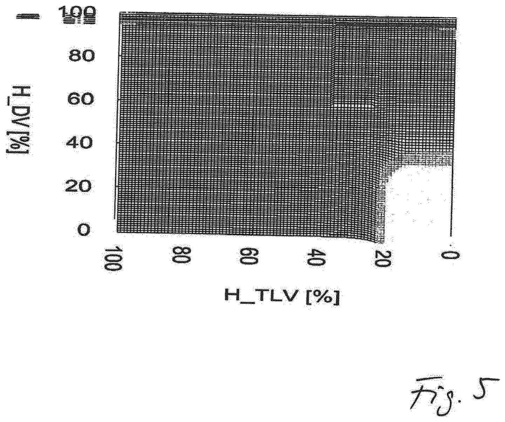

Wie eingangs geschildert wurde, markieren nun die Anlagenzustände "Prozess" (Zustand A) und "Entkoken" (Zustand B) geeignete Ausgangs- und Endzustände, zwischen denen die Prozessanlage regelmäßig überführt werden muss, wie aus der Figur 5 hervorgeht. In der Figur 5 ist die "Höhenlandschaff" gemäß Figur 4 in einer Projektion auf die Grundfläche 25 gezeigt. Gemäß der Erfindung wird nun die Modellbildung gemäß dem ersten Schritt des erfindungsgemäßen Verfahrens dazu herangezogen, um in einem zweiten Schritt eine Steuerkurve anhand der Werteverteilung der Prozessvariablen PT01 zu bestimmen, welche zur Veränderung der zwei Stellgrößen H_TLV und H_DV dient, um die Prozessanlage von dem Ausgangszustand A in den Endzustand B zu überführen. Hierzu können geeignete Pfadsuche-Verfahren angewandt werden, die in der Lage sind, Randbedingungen und Optimalitätsparameter zu berücksichtigen.

Eine maßgebliche Randbedingung kann beispielweise das Aufspannen eines zulässigen Druckbandes für den Druck PT01 in Anbetracht der eingangs geschilderten Anforderungen an die Anlagensicherheit sein. Unter einem Druckband ist dabei ein eingegrenzter Bereich des Drucks zu verstehen, der einen minimalen und einen maximalen Druck aufweist, der nicht unter- bzw. überschritten werden darf. Die Steuerkurve wird dann so bestimmt, dass der Druck PT01 während der Veränderung der Stellgrößen H_TLV und H_DV innerhalb eines gewünschten Grenzbereichs bleibt. Weiterhin kann eine Randbedingung durch die in Figur 3 gezeigten möglichen Bewegunsgrichtungen der Stellgrößen vorgegeben sein. Außerdem ist es denkbar, eine weitere Randbedingung durch weitere Einschränkungen wie beispielsweise eine maximale Anzahl von Stopps und Wiederanläufen der Stellantriebe vorzusehen. Die vorgenannte Auflistung von Randbedingungen, die bei der Bestimmung der Steuerkurve berücksichtigt werden können, ist nicht abschließend. Insbesondere ist es auch denkbar, dass mehrere Randbedingungen gleichzeitig bei der Bestimmung der Steuerkurve berücksichtigt werden.

Weiterhin können Optimalitätsparameter bei der Bestimmung der Steuerkurve berücksichtigt werden, womit im Allgemeinen Gütekriterien gemeint sind, die den Verlauf und das Ergebnis der Pfadsuche und damit die Bestimmung der Steuerkurve als Lösung der Steuerungsaufgabe geeignet beeinflussen, jedoch stets unter Berücksichtigung der Einhaltung der notwendigen Randbedingungen.

Beispielsweise ist die Suche eines Pfads in der Werteverteilung des Drucks PT01 denkbar, der einen möglichst kurzen und damit schnellen Weg zwischen den Zuständen A und B der Prozessanlage findet, wobei gleichzeitig der Druck PT01 in den zulässigen Grenzen durch die entsprechende Randbedingung gehalten wird. Weiterhin kann aber es auch wünschenswert sein, den Druck PT01 im Wesentlichen konstant und mittig des zulässigen Druckbandes (zwischen den Grenzwerten des Drucks PT01) zu halten und die Dauer des Zustandsüberganges weniger als Kriterium der Pfadsuche zu betonen. In dieser Hinsicht sind vielfältige Varianten und verschiedenartig gewichtete Mischformen denkbar, die je nach zu lösender Steuerungsaufgabe variieren können.

Entscheidend ist, dass jede Lösung der Steuerungsaufgabe, d.h. jede Steuerkurve, in eine geeignete Parametrierung der für die eigentliche Steuerungsaufgabe über Signalaustausch mit und Einfluss auf den Prozess zuständige industrielle Steuerungshardware münden. Über die Hinterlegung von Kurvenscharen für verschiedene Prozessbedingungen (Prozessparameter) kann eine flexible Steuerung aufgebaut werden, die an viele verschiedene Prozesse anpassbar ist. Die optionale Kopplung des Verfahrens online an den Prozess (via Steuerungshardware) ermöglicht einen integrierten Regelkreis mit weitergehenden Möglichkeiten der Berechnung sowie eine Optimierung des Verfahrens über Lern-Algorithmen.

Vorliegend wurde beispielhaft die Anwendung des erfindungsgemäßen Verfahrens anhand eines Steuerungsproblems für den Ethylenprozess erläutert. Dabei wurde auf die Prozesscharakteristik und die daraus resultierenden Anforderungen an ein Steuerungssystem eingegangen. Nachfolgend wurde schrittweise die Lösung dieser Steuerungsaufgabe mit zwei Stellgrößen durch Anwendung von Pfadsuche-Algorithmen auf eine Werteverteilung einer Prozessvariablen im mehrdimensionalen Parameter-Raum unter Berücksichtigung von Randbedingungen und Optimalitätskriterien eingegangen.

Insgesamt schafft die vorliegende Erfindung ein vorteilhaftes Verfahren zur Lösung einer Steuerungsaufgabe, bei der in einem ersten Schritt eine Werteverteilung der wenigstens einen Prozessvariablen für verschiedene Wertekombinationen der wenigstens zwei Stellgrößen in deren Stellbereich ermittelt wird und zwar unter Berücksichtigung von einem oder mehreren Prozessparameter(n), insbesondere einer Temperatur, eines Volumenstroms oder mindestens einer physikalischen Konstanten der Prozessanlage. In diesem ersten Schritt wir somit das Verhalten wenigstens einer kritischen Prozessvariablen in Abhängigkeit von mehreren Stellgrößen und mindestens einem Prozessparameter simuliert bzw. modelliert. Die Simulation kann durch eine geeignete Computersoftware implementiert und auf einem Computersystem ausgeführt werden.

In einem zweiten Schritt wird zur Lösung der Steuerungsaufgabe eine Steuerkurve anhand der Werteverteilung der Prozessvariablen ermittelt. Mit anderen Worten wird der simulierte Verlauf der Prozessvariablen dazu herangezogen, eine geeignete Steuerkurve zu ermitteln. Die Steuerkurve legt dabei die zeitliche Veränderung der wenigstens zwei Stellgrößen fest, um die Prozessanlage von dem Ausgangszustand in den Endzustand zu überführen, wobei die Steuerkurve unter Berücksichtigung von mindestens einer Randbedingung festgelegt wird. Die Steuerkurve kann anhand verschiedener Kriterien ermittelt werden, die mehr oder weniger stark bei der Ermittlung ins Gewicht fallen können.

Bei der Ermittlung der Steuerkurve kann ein geeigneter Algorithmus herangezogen werden, insbesondere ein Pfadsuche-Verfahren. Besonders vorteilhaft ist es, dass die Werteverteilungen der wenigstens einen Prozessvariablen, d.h. der simulierte Verlauf bzw. die simulierte Verteilung der Prozessvariablen für verschiedene Wertekombinationen der Stellgrößen sowie die geeignete Steuerkurve vor der Durchführung der Steuerungsaufgabe bzw. sogar vor dem Prozess in einem Computersystem gespeichert sein kann. Bei der Durchführung der Steuerungsaufgaben muss dann nur noch auf die gespeicherte Steuerkurve zurückgegriffen werden.

Weiterhin ist es möglich, für verschiedene Prozessparameter, beispielsweise verschiedene Temperaturen oder Volumenströme innerhalb der Prozessanlage, verschiedene Steuerkurven festzulegen. Bei der Durchführung der Steuerungsaufgabe müssen dann nur noch die aktuellen Prozessparameter erfasst werden und die passende Steuerkurve auf die Stellgrößen angewendet werden. Es versteht sich, dass die Prozessvariable kein Druck sein muss. Vielmehr ist es denkbar, dass in einem Ausführungsbeispiel der Erfindung die kritische Prozessvariable eine Temperatur oder dergleichen darstellt, während der Druck einen Prozessparameter bildet, der lediglich bei der Simulation der Prozessvariablen, nämlich der Temperatur, berücksichtigt wird.

### Bezugszeichenliste:

- 1: Reaktor
- 3: 1. Zufuhrleitung
- 5: 2. Zufuhrleitung
- 7: Produkthauptleitung
- 9: Angeschlossene Systeme
- 11: Produktleitung
- 13: Entkokungsleitung
- 15: Entkokungsschieber
- 15': Entkokungsschieber
- 17: Prozessschieber
- 19: Lokales Bedienpult
- 21: Steuerungs-Hardware
- 23: Rechner-Hardware
- 25: Grundfläche
- 27: Senkrechte Bewegung
- 29: Waagrechte Bewegung
- 31: Winkelige Bewegung
- PT01: Druck
- A: Ausgangszustand
- B: Endzustand

## Patentansprüche

1. Verfahren zur Lösung einer Steuerungsaufgabe in einer Prozessanlage, insbesondere zur Überführung der Prozessanlage von einem Ausgangszustand (A) in einen Endzustand (B), durch Veränderung von wenigstens zwei Stellgrößen (H_DV, H_TLV) in deren Stellbereich, wobei die Stellgrößen einer oder mehreren Prozesseinheit(en), insbesondere Ventilen, Armaturen oder Klappen, zugeordnet sind und wobei die wenigstens zwei Stellgrößen (H_DV, H_TLV) wenigstens eine Prozessvariable (PT01) der Prozessanlage, insbesondere einen Druck, beeinflussen, **gekennzeichnet durch** die folgenden Schritte:
- ermitteln einer Werteverteilung der wenigstens einen Prozessvariablen (PT01) für verschiedene Wertekombinationen (x, y) der wenigstens zwei Stellgrößen (H_DV, H_TLV) in deren Stellbereich unter Berücksichtigung von einem oder mehreren Prozessparameter(n), insbesondere einer Temperatur, eines Volumenstroms oder mindestens einer physikalischen Konstanten der Prozessanlage, durch Modellbildung und/oder Simulation der Werteverteilung der wenigstens einen Prozessvariablen (PT01) für verschiedene Wertekombinationen (x, y) der wenigstens zwei Stellgrößen (H_DV, H_TLV), und
- bestimmen einer Steuerkurve anhand eines Pfadsuche-Verfahrens in der Werteverteilung der Prozessvariablen (PT01), welches zur Veränderung der wenigstens zwei Stellgrößen (H_DV, H_TLV) einen geeigneten Pfad sucht, um die Prozessanlage von dem Ausgangszustand (A) in den Endzustand (B) zu überführen, unter Berücksichtigung von mindestens einer Randbedingung, die durch einen festgelegten Grenzbereich der wenigstens einen Prozessvariablen, und/oder einen Stellbereich der Stellgrößen, und/oder durch mechanische Charakteristiken der Prozesseinheit(en) festgelegt wird.

2. Verfahren nach Anspruch 1,
**dadurch gekennzeichnet, dass**
für verschiedene Prozessparameter unterschiedliche Werteverteilungen der wenigstens einen Prozessvariablen ermittelt werden.

3. Verfahren nach Anspruch 1 oder 2,
**dadurch gekennzeichnet, dass**
die Prozessparameter vor Beginn und/oder während des zu steuernden Prozesses in der Prozessanlage erfasst werden.

4. Verfahren nach einem der vorhergehenden Ansprüche,
**dadurch gekennzeichnet, dass**
mindestens eine der wenigstens zwei Stellgrößen (H_DV, H_TLV) eine Drosselung eines Fluid- oder Gasstroms beeinflusst.

5. Verfahren nach einem der vorhergehenden Ansprüche,
**dadurch gekennzeichnet, dass**
jeder Wertekombination (x, y) in dem Stellbereich der wenigstens zwei Stellgrößen (H_DV, H_TLV) zur Erzeugung der Werteverteilung ein Wert der Prozessvariablen (PT01) unter Berücksichtigung der ein oder mehreren Prozessparameter zugeordnet wird.

6. Verfahren nach einem der vorhergehenden Ansprüche,
**dadurch gekennzeichnet, dass**
ein Zustand der Prozessanlage durch eine Wertekombination (x, y) der wenigstens zwei Stellgrößen (H_DV, H_TLV) definiert wird.

7. Verfahren nach einem der vorhergehenden Ansprüche,
**dadurch gekennzeichnet, dass**
ein festgelegter Grenzbereich der wenigstens einen Prozessvariablen (PT01) die Randbedingung bildet.

8. Verfahren nach einem der vorhergehenden Ansprüche,
**dadurch gekennzeichnet, dass**
die Randbedingung durch den Stellbereich der Stellgrößen (H_DV, H_TLV) festgelegt wird.

9. Verfahren nach einem der vorhergehenden Ansprüche,
**dadurch gekennzeichnet, dass**
die Randbedingung durch mechanische Charakteristiken der Prozesseinheit(en) festgelegt wird.

## Claims

1. A method for solving a control task in a process plant, particularly for transitioning the process plant from an initial state (A) to a final state (B) by changing at least two manipulated variables (H_DV, H_TLV) in the control range thereof, the manipulated variables being assigned to one or more process unit(s), particularly valves, taps or butterfly valves and the at least two manipulated variables (H_DV, H_TLV) influencing at least one process variable (PT01) of the process plant, particularly a pressure, **characterized by** the following steps:
- determining a value distribution of the at least one process variable (PT01) for various value combinations (x, y) of the at least two manipulated variables (H_DV, H_TLV) in the control range thereof taking one or more process parameter(s) into account, particularly a temperature, a volumetric flow or at least one physical constant of the process plant, by means of modelling and/or simulation of the value distribution of the at least one process variable (PT01) for various value combinations (x, y) of the at least two manipulated variables (H_DV, H_TLV), and
- determining a control curve on the basis of a path search method in the value distribution of the process variables (PT01), which searches for a suitable path for changing the at least two manipulated variables (H_DV, H_TLV) in order to transition the process plant from the initial state (A) to the end state (B), taking account of at least one boundary condition which is determined by means of a fixed limit region of the at least one process variable, and/or a control range of the manipulated variables, and/or by means of mechanical characteristics of the process unit(s).

2. The method according to Claim 1,
**characterized in that**
different value distributions of the at least one process variable are determined for various process parameters.

3. The method according to Claim 1 or 2,
**characterized in that**
the process parameters are detected in the process plant prior to starting and/or during the process to be controlled.

4. The method according to one of the preceding claims,
**characterized in that**
at least one of the at least two manipulated variables (H_DV, H_TLV) influences a throttling of a fluid or gas flow.

5. The method according to one of the preceding claims,
**characterized in that**
a value of the process variables (PT01) is assigned to each value combination (x, y) in the control range of the at least two manipulated variables (H_DV, H_TLV) for generating the value distribution taking account of the one or more process parameters.

6. The method according to one of the preceding claims,
**characterized in that**
a state of the process plant is defined by means of a value combination (x, y) of the at least two manipulated variables (H_DV, H_TLV).

7. The method according to one of the preceding claims,
**characterized in that**
a fixed limit region of the at least one process variable (PT01) forms the boundary condition.

8. The method according to one of the preceding claims,
**characterized in that**
the boundary condition is fixed by means of the control range of the manipulated variables (H_DV, H_TLV).

9. The method according to one of the preceding claims,
**characterized in that**
the boundary condition is fixed by means of mechanical characteristics of the process unit(s).

## Revendications

1. Procédé destiné à résoudre une tâche de commande dans une installation de processus, notamment pour faire passer l'installation de processus d'un état initial (A) à un état final (B), en modifiant au moins deux valeurs de réglage (H_DV, H_TLV) dans la plage de réglages de celles-ci, sachant que les valeurs de réglage sont attribuées à une ou à plusieurs unités de processus, notamment des soupapes, des robinetteries ou des clapets, et sachant qu'au moins deux valeurs de réglage (H_DV, H_TLV) influencent au moins une variable de processus (PT01) de l'installation de processus, notamment une pression, **caractérisé par** les étapes suivantes :
- détermination d'une répartition de valeurs d'au moins une variable de processus (PT01) pour différentes combinaisons de valeurs (x, y) d'au moins deux valeurs de réglage (H_DV, H_TLV) dans la plage de réglages de celles-ci en tenant compte d'un ou de plusieurs paramètre(s) de processus, notamment d'une température, d'un débit volumique ou au moins d'une constante physique de l'installation de processus par modélisation et/ou simulation de la répartition de valeurs d'au moins une variable de processus (PT01) pour différentes combinaisons de valeurs (x, y) d'au moins deux valeurs de réglage (H_DV, H_TLV), et
- détermination d'une courbe de commande à l'aide d'un procédé de recherche de chemin dans la répartition des valeurs de la variable de processus (PT01), lequel recherche un chemin approprié pour la modification d'au moins deux valeurs de réglage (H_DV, H_TLV) pour transférer l'installation de processus de l'état initial (A) à l'état final (B) en tenant compte d'au moins une condition marginale qui est établie par une zone limite définie d'au moins une variable de processus et/ou une plage de réglages des valeurs de réglage et/ou par des caractéristiques mécaniques de l'unité ou des unités de processus.

2. Procédé selon la revendication 1,
**caractérisé en ce que**
des répartitions de valeurs différenciées d'au moins une variable de processus sont déterminées pour différents paramètres de processus.

3. Procédé selon la revendication 1 ou 2,
**caractérisé en ce que**
les paramètres de processus sont saisis avant le début et/ou pendant le processus à commander dans l'installation de processus.

4. Procédé selon l'une quelconque des revendications précédentes,
**caractérisé en ce qu'**
au moins une des au moins deux valeurs de réglage (H_DV, H_TLV) influence une restriction d'un débit de fluide ou de gaz.

5. Procédé selon l'une quelconque des revendications précédentes,
**caractérisé en ce qu'**
une valeur des variables de processus (PT01) est attribuée à chaque combinaison de valeurs (x, y) dans la plage de réglages d'au moins deux valeurs de réglage (H_DV, H_TLV) pour produire la répartition de valeurs en tenant compte d'un ou plusieurs paramètres de processus.

6. Procédé selon l'une quelconque des revendications précédentes,
**caractérisé en ce qu'**
un état de l'installation de processus est défini par une combinaison de valeurs (x, y) d'au moins deux valeurs de réglage (H_DV, H_TLV).

7. Procédé selon l'une quelconque des revendications précédentes,
**caractérisé en ce que**
la zone limite définie d'au moins une variable de processus (PT01) forme la condition marginale.

8. Procédé selon l'une quelconque des revendications précédentes,
**caractérisé en ce que**
la condition marginale est définie par la plage de réglages des valeurs de réglage (H_DV, H_TLV).

9. Procédé selon l'une quelconque des revendications précédentes,
**caractérisé en ce que**
la condition marginale est définie par des caractéristiques mécaniques de l'unité/des unités de processus.
